# EUROPÄISCHE PATENTSCHRIFT

(11) **EP 4 340 311 B1**
(45) Veröffentlichungstag und Bekanntmachung des Hinweises auf die Patenterteilung: **11.09.2024**
(21) Anmeldenummer: 22196186.5
(22) Anmeldetag: 16.09.2022
(51) Int. Cl.: H04L 41/0806, H04L 41/08, H04L 41/12, H04L 12/18, H04W 4/06, H04L 41/5054

(54) **VERFAHREN UND STEUERUNGSPROGRAMM ZUR AUTOMATISIERTEN KONFIGU-RATION EINES MEHRERE VLANS UMFASSENDEN KOMMUNIKATIONSNETZES**
METHOD AND CONTROL PROGRAM FOR THE AUTOMATED CONFIGURATION OF A COMMUNICATION NETWORK COMPRISING SEVERAL VLANS
PROCÉDÉ ET PROGRAMME DE COMMANDE POUR LA CONFIGURATION AUTOMATISÉE D'UN RÉSEAU DE COMMUNICATION COMPRENANT PLUSIEURS VLAN

(43) Veröffentlichungstag der Anmeldung: 20.03.2024
(73) Patentinhaber: Siemens Aktiengesellschaft, 80333 München (DE)
(72) Erfinder: Gsänger, Volker, 91126 Kammerstein (DE); Rehm, Andreas, 90475 Nürnberg (DE); Schwering, Wolfgang, 91341 Röttenbach (DE); Wörmann, Torsten, 91056 Erlangen (DE)
(74) Vertreter: Siemens Patent Attorneys

(56) Entgegenhaltungen:
- US-A1- 2006 209 714
- ANONYMOUS: "IEEE Standard for Local and Metropolitan Area Networks--Bridges and Bridged Networks -- Amendment 31: Stream Reservation Protocol (SRP) Enhancements and Performance Improvements", IEEE STANDARD, IEEE, PISCATAWAY, NJ USA, 29 October 2018 (2018-10-29), pages 1 - 208, XP068132839, ISBN: 978-1-5044-5064-5, [retrieved on 20181029], DOI: 10.1109/IEEESTD.2018.8514112

## Beschreibung

Die vorliegende Erfindung betrifft ein Verfahren zur automatisierten Konfiguration eines mehrere Virtual Local Area Networks (VLANs) umfassenden Kommunikationsnetzes, insbesondere eines Kommunikationsnetzes eines industriellen Automatisierungssystems, und ein Steuerungsprogramm zur Durchführung des Verfahrens.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Gestörte Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht vollständig übermittelte oder kompromittierte Nachrichten einen Übergang oder Verbleib eines industriellen Automatisierungssystems in einen sicheren Betriebszustand verhindern. Durch einen für industrielle Automatisierungssysteme typischen Meldungsverkehr mit verhältnismäßig vielen, aber relativ kurzen Nachrichten werden obige Probleme verstärkt.

In EP 3 142 296 B1 ist ein Verfahren zur Konfiguration eines modularen Steuerungsgeräts eines industriellen Automatisierungssystems beschrieben, das eine Zentraleinheit und zumindest ein Kommunikationsmodul mit jeweils einem integrierten Router umfasst. Router-Konfigurationseinheiten erster Router erfassen verfügbare Router-Funktionen und zugeordnete Prioritätswerte anderer Router. Erste Router weisen eine erweiterte Router-Funktion für eine Verbindung mit einem übergeordneten Kommunikationsnetz auf. Zweite Router umfassen eine eingeschränkte Router-Funktion für eine Verbindung mit einem untergeordneten Feldebenen-Teilnetz. Bei vorhandenen weiteren ersten Routern überprüfen die Router-Konfigurationseinheiten der ersten Router jeweils anhand der Prioritätswerte, welchem ersten Router der höchste Prioritätswert zugeordnet ist. Der erste Router mit dem höchsten Prioritätswert wird als übergeordneter Router für eine Verbindung mit einem übergeordneten Kommunikationsnetz konfiguriert.

Zur Überprüfung von innerhalb eines industriellen Automatisierungssystems mit mehreren Automatisierungszellen übermittelten Datagrammen werden entsprechend EP 3 646 559 B1 zu überprüfende Datagramme aus den Automatisierungszellen über eine jeweilige Firewall-Schnittstelle zur Überprüfung an Firewall-System übermittelt und dort regelbasiert überprüft. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

Aus WO 2020/224753 A1 ist ein Verfahren zum Konfigurieren eines industriellen Echtzeit-fähigen Kommunikationsnetzwerks für das zyklische Übertragen von Nachrichten bekannt, die jeweils eine oder mehrere Datensätze umfassen. Das Kommunikationsnetzwerk weist eine Nachrichtenquelle zum Erzeugen und zyklischen Aussenden der Nachrichten, zumindest eine Nachrichtensenke zum Empfang und Verarbeiten der Nachrichten sowie zumindest eine Netzwerkkomponente auf, die Nachrichten von der Nachrichtenquelle an die Nachrichtensenken weiterleitet. Das Konfigurieren umfasst die Bestimmung einer Netzwerktopologie des Kommunikationsnetzwerks für die Übertragung eines von der Nachrichtenquelle zukünftig auszusendenden Datenstroms, in dem die Nachrichten jeweils mit allen Datensätzen zyklisch ausgesendet werden.

Entsprechend WO 2020/224753 A1 wird ermittelt, welchen oder welche der Datensätze in dem Datenstrom eine jeweilige der Nachrichtensenken empfangen möchte. Ferner wird ein jeweiliger Filter für jede Netzwerkkomponente ermittelt und eingerichtet, indem aus der Netzwerktopologie die an die jeweilige Netzwerkkomponente angeschlossenen Komponenten sowie die für die angeschlossenen Nachrichtensenken erforderlichen Datensätze ermittelt werden. Dadurch werden im Betrieb des Kommunikationsnetzwerks in stromabwärtiger Richtung des Datenstroms in den Nachrichten ausschließlich erforderliche Datensätze übertragen.

Aus US 2006/209714 A1 ist ein Verfahren zur automatischen Konfiguration einer Kommunikationseinrichtung (TP1) mit einer vorbehaltenen Identifikationsnummer mit mindestens einer Netzknoteneinrichtung bekannt, durch die ein zugeordnetes Subnetzwerk eines Netzwerks verwaltet wird, mindestens einem virtuellen Netzwerk, dem die Kommunikationseinrichtung zugeordnet ist, wobei innerhalb des virtuellen Netzwerks ausgetauschte Datenpakete mit der vorbehaltenen Identifikationsnummer markiert sind. Dabei erfolgt zunächst eine Ermittlung einer Netzwerkadresse des Subnetzwerks durch ein im Netzwerk angeordnetes Netzelement. Im Anschluss daran erfolgt eine Übersendung einer mit der Netzwerkadresse des Subnetzwerks als Zieladresse eingestellten Konfigurationsnachricht vom Netzelement an die Netzknoteneinrichtung, welche von der Netzknoteneinrichtung als eine mit der vorbehaltenen Identifikationsnummer markierten Rundrufnachricht an das virtuelle Netzwerk weitergeleitet wird. Die Rundrufnachricht wird von der Kommunikationseinrichtung empfangen, worauf die Kommunikationseinrichtung anhand der Identifikationsnummer konfiguriert wird.

In industriellen Automatisierungssystemen erfolgt eine Segmentierung von Kommunikationsnetzen häufig auf Basis von VLANs (Virtual Local Area Networks) gemäß IEEE 802.1Q. Eine Konfiguration eines VLAN hängt von individuellen Anwendungsanforderungen innerhalb eines industriellen Automatisierungssystems ab und erfolgt üblicherweise individuell für jedes Teilnetz. Für eine VLAN-Konfiguration sind an Netzinfrastrukturgeräten, wie Switchen und Routern, insbesondere jeweils Trunk-Ports, über die mehreren unterschiedlichen VLANs zugeordneter Datenverkehr übermittelt wird, und Access-Ports, an die üblicherweise nur einem VLAN zugeordnete Endgeräte angeschlossen sind, zu spezifizieren. Darüber hinaus sind Unicast-Datenverkehr, beispielsweise entsprechend PROFINET-IO, einerseits und Multicast-Datenverkehr, beispielsweise entsprechend IEC 61850-8-2 GOOSE, andererseits in vielen Anwendungsfällen unterschiedlich zu behandeln. Somit kann eine VLAN-Konfiguration über sämtliche Netzinfrastrukturgeräte innerhalb von industriellen Automatisierungssystem schnell unübersichtlich und fehleranfällig werden. Zudem müssen Änderungen bestehender VLAN-Konfigurationen pro Gerät und Port einzeln durchgeführt werden.

Der vorliegenden Erfindung liegt daher die Aufgabe zugrunde, ein Verfahren zur automatisierten Konfiguration eines mehrere VLANs umfassenden Kommunikationsnetzes anzugeben, das eine effiziente und wenig fehleranfällige Konfiguration von VLANs in komplex strukturierten Kommunikationsnetzen ermöglicht, sowie eine geeignete Implementierung zur Durchführung des Verfahrens zu schaffen.

Diese Aufgabe wird erfindungsgemäß durch ein Verfahren mit den in Anspruch 1 angegebenen Merkmalen und durch ein Steuerung mit den in Anspruch 16 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur automatisierten Konfiguration eines mehrere VLANs umfassenden Kommunikationsnetzes erfolgt für jedes VLAN ausgehend von Kommunikationsendgeräten an Ports von Switchen bzw. Routern entlang dem jeweiligen VLAN zugeordneten Pfaden jeweils eine Festlegung eines VLAN-Port-Betriebsmodus in Abhängigkeit einer Nutzung des jeweiligen Ports durch das jeweilige VLAN. Einem VLAN zugeordnete Pfade umfassen insbesondere ausgewählte Pfade, über die dem jeweiligen VLAN zugeordnete Frames übermittelt werden. Vorzugsweise erfolgt die Verfolgung der dem jeweiligen VLAN zugeordneten Pfade zur Festlegung der VLAN-Port-Betriebsmodi ausgehend von jedem dem jeweiligen VLAN zugeordneten Kommunikationsendgerät.

Erfindungsgemäß werden mittels erster VLAN-Port-Konfigurationsmarken VLAN-Segmentgrenzen festgelegt werden. Dabei werden eingehende und ausgehende Frames am jeweiligen Port demselben VLAN zugeordnet. Mittels zweiter VLAN-Port-Konfigurationsmarken werden Grenzen für eine Verfolgung der dem jeweiligen VLAN zugeordneten Pfade zur Festlegung der VLAN-Port-Betriebsmodi gesetzt. Demgegenüber werden mittels dritter VLAN-Port-Konfigurationsmarken Grenzen für eine Verfolgung der dem jeweiligen VLAN zugeordneten Pfade nur in Bezug auf ausgehende Frames zur Festlegung der VLAN-Port-Betriebsmodi gesetzt. Anhand der VLAN-Port-Konfigurationsmarken werden die Verfolgung der dem jeweiligen VLAN zugeordneten Pfade und eine auf der Festlegung der VLAN-Port-Betriebsmodi basierende Konfiguration der von diesen Pfaden umfassten Ports gesteuert.

Durch Verwendung von VLAN-Port-Konfigurationsmarken wird mit der vorliegenden Erfindung eine Basis für eine Automatisierung von VLAN-Konfigurationen geschaffen. Damit müssen sich Netz- bzw. Anlagenbetreiber nicht mehr manuell bei jedem einzelnen Gerät um die jeweilige VLAN-Konfiguration kümmern. Vielmehr werden entsprechende Konfigurationsaufgaben nach Setzen der VLAN-Port-Konfigurationsmarken vorteilhafterweise automatisch erledigt. Das Setzen der VLAN-Port-Konfigurationsmarken ermöglich somit ein vereinfachtes, fehlersicheres Engineering von Kommunikationsnetzen insbesondere in industriellen Automatisierungssystemen. Dies gilt für eine initiale VLAN-Konfiguration als auch für spätere Änderungen oder Erweiterungen.

Für ein VLAN ohne zugeordnete Kommunikationsendgeräte kann die Verfolgung der dem jeweiligen VLAN zugeordneten Pfade zur Festlegung der VLAN-Port-Betriebsmodi vorteilhafterweise ausgehend von zumindest einem ausgewählten, dem jeweiligen VLAN zugeordneten Switch oder Router erfolgen. Dabei kann für die Verfolgung der dem jeweiligen VLAN zugeordneten Pfade beispielsweise ein Switch oder Router auf einer niedrigsten topologischen Ebene des Kommunikationsnetzes innerhalb der jeweiligen VLAN-Segmentgrenze ausgewählt werden.

Entsprechend einer bevorzugten Ausgestaltung der vorliegenden Erfindung umfassen die VLAN-Port-Betriebsmodi jeweils zumindest einen Trunk-Modus und einen Untagged-Modus. Frames (Datenrahmen), die einen dem jeweiligen VLAN zugeordneten VLAN-Identifikator umfassen, werden über einen Port weitergeleitet, wenn dieser für das jeweilige VLAN im Trunk-Modus konfiguriert ist. Demgegenüber werden eingehende Frames, die keinen VLAN-Identifikator umfassen, unter Einfügung eines VLAN-Identifikators über einen Port weitergeleitet, wenn dieser für das jeweilige VLAN in Bezug auf eingehende Frames im Untagged-Modus konfiguriert ist. Darüber hinaus werden ausgehende Frames, die einen dem jeweiligen VLAN zugeordneten VLAN-Identifikator umfassen, unter Entfernung des VLAN-Identifikators über einen Port weitergeleitet, wenn dieser für das jeweilige VLAN in Bezug auf ausgehende Frames im Untagged-Modus konfiguriert ist.

Vorteilhafterweise wird ein VLAN, das Kommunikationsendgeräte ohne VLAN-Funktionalität umfasst und an dessen VLAN-Segmentgrenze dem VLAN zugeordnete Frames über einen Port weitergeleitet werden, an dem eine erste VLAN-Port-Konfigurationsmarke gesetzt ist, am jeweiligen Port für eingehende und ausgehende Frames im Untagged-Modus konfiguriert. Somit wird eine konsistente, bequeme Umsetzung der VLAN-Port-Konfigurationsmarken in die VLAN-Konfiguration erreicht. Vorzugsweise wird am jeweiligen Port, an dem an dem eine erste VLAN-Port-Konfigurationsmarke gesetzt ist, nur ein VLAN für eingehende und ausgehende Frames im Untagged-Modus konfiguriert. Des Weiteren wird jedes VLAN, dessen zugeordnete Frames über einen Port weitergeleitet werden, an dem eine zweite VLAN-Port-Konfigurationsmarke gesetzt ist, entsprechend einer weiteren bevorzugten Ausgestaltung der vorliegenden Erfindung am jeweiligen Port für ausgehende Frames im Trunk-Modus konfiguriert.

Darüber können die VLAN-Port-Betriebsmodi jeweils zusätzlich einen Forbidden-Modus umfassen. In diesem Fall ist eine Weiterleitung von eingehenden oder ausgehenden Frames, die einen dem jeweiligen VLAN zugeordneten VLAN-Identifikator umfassen, über einen Port dauerhaft, nicht dynamisch änderbar gesperrt, wenn dieser für das jeweilige VLAN in Bezug auf eingehende oder ausgehende Frames im Forbidden-Modus konfiguriert ist. Jedes VLAN, das keine zugeordneten eingehenden Frames an einem Port aufweist, an dem eine dritte VLAN-Port-Konfigurationsmarke gesetzt ist, wird vorteilhafterweise am jeweiligen Port für ausgehende Frames im Forbidden-Modus konfiguriert wird. Die ermöglicht ein nochmals komfortableres Engineering von Kommunikationsnetzen. In diesem Sinn wird jedes VLAN, das zugeordnete eingehende Frames an einem Port aufweist, an dem eine dritte VLAN-Port-Konfigurationsmarke gesetzt ist, am jeweiligen Port für ausgehende Frames vorzugsweise im Trunk-Modus konfiguriert.

Zusätzlich zu den VLAN-Port-Konfigurationsmarken können für eine einfache und zuverlässige Behandlung von Unicast-Datenverkehr und Multicast-Datenverkehr beim Engineering von Kommunikationsnetzen VLAN-Multicast-Konfigurationsmarken gesetzt werden. Mittels erster VLAN-Multicast-Konfigurationsmarken werden vorteilhafterweise VLAN-Segmentgrenzen für eine Übermittlung von Multicast-Frames innerhalb eines mehrere VLANs umfassenden Multicast-Bereichs festgelegt. Außerdem können mittels zweiter VLAN-Multicast-Konfigurationsmarken Multicast-Frames innerhalb des Multicast-Bereichs weiterleitende Kommunikationsgeräte festgelegt werden. Demgegenüber können mittels dritter VLAN-Multicast-Konfigurationsmarken Multicast-Frames sendende bzw. empfangende Kommunikationsendgeräte innerhalb des jeweiligen Multicast-Bereichs festgelegt werden. Anhand der VLAN-Multicast-Konfigurationsmarken erfolgt vorzugsweise für jeden Multicast-Bereich jeweils eine Festlegung des VLAN-Port-Betriebsmodus der dem jeweiligen Multicast-Bereich zugeordneten Ports der Multicast-Frames weiterleitenden Kommunikationsgeräte. Somit können individuelle Anwendungsanforderungen hinsichtlich einer jeweils gewünschten Behandlung von Unicast-Datenverkehr bzw. Multicast-Datenverkehr bei der VLAN-Konfiguration benutzerfreundlich und fehlersicher berücksichtigt werden.

Für den entsprechend den ersten VLAN-Multicast-Konfigurationsmarken festgelegten Multicast-Bereich wird vorteilhafterweise zumindest ein separates Multicast-VLAN eingerichtet. Darüber hinaus werden Ports zwischen entsprechend den zweiten VLAN-Multicast-Konfigurationsmarken festgelegten, demselben Multicast-Bereich zugeordneten Multicast-Frames weiterleitenden Kommunikationsgeräten für das jeweilige Multicast-VLAN vorzugsweise im Trunk-Modus konfiguriert. Auch Ports an Multicast-Frames weiterleitenden Kommunikationsgeräten, an die entsprechend den dritten VLAN-Multicast-Konfigurationsmarken festgelegte, demselben Multicast-Bereich zugeordnete Kommunikationsendgeräte angeschlossen sind, werden für das jeweilige Multicast-VLAN bevorzugt im Trunk-Modus konfiguriert.

Für den Fall, dass die VLAN-Port-Betriebsmodi jeweils einen Forbidden-Modus umfassen, können Ports an Multicast-Frames weiterleitenden Kommunikationsgeräten, an die keine Kommunikationsendgeräte angeschlossen sind, die durch dritte VLAN-Multicast-Konfigurationsmarken festgelegt bzw. einem Multicast-Bereich zugeordnet sind, für das jeweilige Multicast-VLAN im Forbidden-Modus konfiguriert werden. Auch diese Weise kann sichergestellt werden, dass die VLAN-Konfiguration nicht unbeabsichtigt durch ein automatisches VLAN-Lernen an den jeweiligen Ports verändert wird.

Entsprechend einer weiteren vorteilhaften Ausgestaltung der vorliegenden Erfindung wird zur Weiterleitung von Multicast-Frames zwischen Kommunikationsendgeräten in zwei unterschiedlichen VLANs ein die beiden VLANs miteinander koppelndes Multicast-VLAN eingerichtet, das weiterleitende Kommunikationsgeräte in beiden VLANs, Kommunikationsendgeräte in beiden VLANs und weiterleitende Kommunikationsgeräte entlang zumindest eines Pfads zwischen den beiden VLANs umfasst. Dementsprechend wird das die beiden VLANs koppelnde Multicast-VLAN am jeweiligen Port der die Multicast-Frames weiterleitenden Kommunikationsgeräte für ausgehende Multicast-Frames im Trunk-Modus konfiguriert wird. Auf diese Weise können bequem und sicher Multicast-VLANs eingerichtet werden, die mehrere bestehende VLANs umfassen.

Das erfindungsgemäße Steuerungsprogramm ist zur Durchführung eines Verfahrens entsprechend vorangehenden Ausführungen vorgesehen und in einem Arbeitsspeicher eines Rechners oder einer virtuellen Maschine ladbar. Dabei weist das Steuerungsprogramm zumindest einen Codeabschnitt auf, bei dessen Ausführung vorangehend beschriebene Schritte, insbesondere die Schritte des Verfahrens gemäß Patentanspruch 1, ausgeführt werden, wenn das Steuerungsprogramm im Rechner oder in der virtuellen Maschine abläuft.

Die vorliegende Erfindung wird nachfolgend an einem Ausführungsbeispiel anhand der Zeichnung näher erläutert. Es zeigt
- Figur 1: ein Kommunikationsnetz eines industriellen Automatisierungssystems mit mehreren mittels VLAN-Port-Konfigurationsmarken festgelegten VLANs sowie mit mehreren Switchen und Routern,
- Figur 2: eine Verfolgung von einem ersten VLAN zugeordneten Pfaden des Kommunikationsnetzes zur Festlegung von VLAN-Port-Betriebsmodi an von den Pfaden umfassten Switchen und Routern,
- Figur 3: eine Verfolgung von einem zweiten VLAN zugeordneten Pfaden zur Festlegung der VLAN-Port-Betriebsmodi an den jeweiligen Switchen und Routern,
- Figur 4: eine Verfolgung von einem dritten VLAN zugeordneten Pfaden zur Festlegung der VLAN-Port-Betriebsmodi an den jeweiligen Switchen und Routern,
- Figur 5: eine Verfolgung von einem übergeordneten VLAN zugeordneten Pfaden zur Festlegung der VLAN-Port-Betriebsmodi an den jeweiligen Switchen und Routern,
- Figur 6: das Kommunikationsnetz gemäß Figur 1 mit einem zusätzlichen, mittels VLAN-Multicast-Konfigurationsmarken festgelegten Multicast-VLAN, das zwei unterschiedliche VLANs für eine Weiterleitung von Multicast-Frames zwischen Kommunikationsendgeräten dieser beiden VLANs miteinander koppelt.

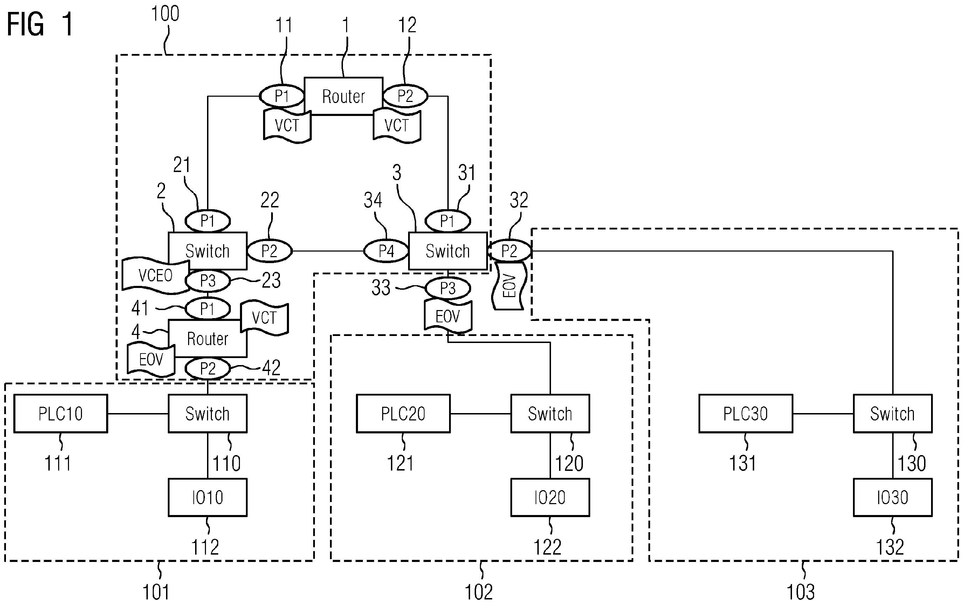

Das in Figur 1 dargestellte beispielhafte Kommunikationsnetz eines industriellen Automatisierungssystems umfasst mehrere Automatisierungszellen 101-103 mit jeweils einem Switch 110, 120, 130, einer speicherprogrammierbaren Steuerung 111, 121, 131 und einer Eingabe/Ausgabe-Einheit 112, 122, 132. Die speicherprogrammierbaren Steuerungen 111, 121, 131 und die Eingabe/Ausgabe-Einheiten 112, 122, 132 sind dabei an den jeweiligen Switch 110, 120, 130 angeschlossen.

Die Automatisierungszellen 101-103 sind durch ein übergeordnetes Netzsegment 100 miteinander verbunden, das mehrere Router 1, 4 und Switche 2-3 umfasst. Über einen ersten Router 1 können das übergeordnete Netzsegment 100 und die Automatisierungszellen 101-103 beispielsweise an ein anlagenweites Steuerungsnetz, an ein Bürokommunikationsnetz bzw. an ein Weitverkehrsnetz angebunden werden. An den ersten Router 1 sind außerdem ein erster Switch 2 und ein zweiter Switch 3 angeschlossen, die zusätzlich direkt miteinander verbunden sind. Dabei sind ein erster Port 11 des ersten Routers 1 und ein erster Port 21 des ersten Switchs 2 miteinander verbunden, während ein zweiter Port 12 des ersten Routers 1 mit einem ersten Port 31 des zweiten Switchs 3 verbunden ist. Außerdem sind ein zweiter Port 22 des ersten Switchs 2 und ein vierter Port 34 des zweiten Switchs 3 miteinander verbunden.

Darüber hinaus ist ein dritter Port 23 des ersten Switchs 2 mit einem ersten Port 41 eines zweiten Routers 4 verbunden, über dessen zweiten Port 42 eine erste Automatisierungszelle 101 mit ihrem Switch 110 an das übergeordnete Netzsegment 100 angebunden ist. Eine zweite Automatisierungszelle 102 und eine dritte Automatisierungszelle 103 sind über den zweiten Switch 3 an das übergeordnete Netzsegment 100 angebunden. Dabei ist die zweite Automatisierungszelle 102 über ihren Switch 120 mit einem dritten Port 33 des zweiten Switchs 3 verbunden, während die dritte Automatisierungszelle 103 über ihren Switch 130 mit einem zweiten Port 32 des zweiten Switchs 3 verbunden ist.

Die speicherprogrammierbaren Steuerungen 111, 121, 131 und die Eingabe/Ausgabe-Einheiten 112, 122, 132 umfassen jeweils integrierte oder zugeordnete Kommunikationsmodule bzw. -geräte und dienen zur Steuerung einer Maschine oder einer technischen Anlage, beispielsweise eines Roboters oder einer Fördervorrichtung. Insbesondere umfassen die speicherprogrammierbaren Steuerungen 111, 121, 131 jeweils zumindest eine Zentraleinheit. Die Eingabe/Ausgabe-Einheiten 112, 122, 132 dienen einem Austausch von Steuerungs- und Messgrößen zwischen der jeweiligen speicherprogrammierbaren Steuerung 111, 121, 131 oder Eingabe/Ausgabe-Einheit 112, 122, 132 und einer gesteuerten Maschine oder Vorrichtung. Die Zentraleinheiten der speicherprogrammierbaren Steuerungen 111, 121, 131 ermitteln anhand erfasster Messgrößen geeignete Steuerungsgrößen für die jeweilige Maschine oder Vorrichtung.

Mittels eines durch ein Steuerungsprogramm implementierten Projektierungswerkzeugs können an einer graphischen Benutzeroberfläche VLAN-Port-Konfigurationsmarken EOV (End of VLAN), VCT (VLAN Calculation Termination), VCEO (VLAN Calculation End Outbound) zur automatisierten VLAN-Konfiguration eines mehrere VLANs umfassenden Kommunikationsnetzes festgelegt werden. Das Steuerungsprogramm ist in einen Arbeitsspeicher eines Rechners oder einer virtuellen Maschine ladbar und umfasst zumindest einen Codeabschnitt, bei dessen Ausführung nachfolgend erläuterte Schritte ausgeführt werden, wenn das Steuerungsprogramm im Rechner oder in der virtuellen Maschine abläuft.

Bei der VLAN-Konfiguration erfolgt für jedes VLAN ausgehend von Kommunikationsendgeräten an Ports von Switchen bzw. Routern entlang dem jeweiligen VLAN zugeordneten Pfaden jeweils eine Festlegung eines VLAN-Port-Betriebsmodus in Abhängigkeit einer Nutzung des jeweiligen Ports durch das jeweilige VLAN. Dabei umfassen einem VLAN zugeordnete Pfade insbesondere ausgewählte Pfade, über die dem jeweiligen VLAN zugeordnete Frames übermittelt werden.

Die VLAN-Port-Betriebsmodi umfassen jeweils zumindest einen Trunk-Modus (T) und einen Untagged-Modus (U). Datenrahmen bzw. Frames, die einen dem jeweiligen VLAN zugeordneten VLAN-Identifikator umfassen, werden über einen Port weitergeleitet, wenn dieser für das jeweilige VLAN im Trunk-Modus (T) konfiguriert ist. Ferner werden eingehende Frames (ingress), die keinen VLAN-Identifikator umfassen, unter Einfügung eines VLAN-Identifikators über einen Port weitergeleitet, wenn dieser für das jeweilige VLAN in Bezug auf eingehende Frames im Untagged-Modus (U) konfiguriert ist. Demgegenüber werden ausgehende Frames (egress), die einen dem jeweiligen VLAN zugeordneten VLAN-Identifikator umfassen, unter Entfernung des VLAN-Identifikators über einen Port weitergeleitet, wenn dieser für das jeweilige VLAN in Bezug auf ausgehende Frames im Untagged-Modus (U) konfiguriert ist.

Im vorliegenden Ausführungsbeispiel umfassen die VLAN-Port-Betriebsmodi jeweils zusätzlich einen Forbidden-Modus (F). Eine Weiterleitung von eingehenden oder ausgehenden Frames, die einen dem jeweiligen VLAN zugeordneten VLAN-Identifikator umfassen, über einen Port kann dauerhaft, nicht dynamisch änderbar gesperrt werden, wenn dieser für das jeweilige VLAN in Bezug auf eingehende oder ausgehende Frames im Forbidden-Modus (F) konfiguriert ist. Die VLAN-Port-Betriebsmodi können für jeden Port eines Switchs bzw. Routers in Bezug auf das jeweilige VLAN differenziert nach eingehendem und ausgehenden Datenverkehr (ingress/egress) in einer VLAN-Konfigurationstabelle für den jeweiligen Switch bzw. Router spezifiziert werden.

Mittels erster VLAN-Port-Konfigurationsmarken EOV werden VLAN-Segmentgrenzen festgelegt. Dabei werden eingehende und ausgehende Frames am jeweiligen Port demselben VLAN zugeordnet. Außerdem werden mittels zweiter VLAN-Port-Konfigurationsmarken VCT Grenzen für eine Verfolgung der dem jeweiligen VLAN zugeordneten Pfade zur Festlegung der VLAN-Port-Betriebsmodi gesetzt. Demgegenüber werden mittels dritter VLAN-Port-Konfigurationsmarken VCEO Grenzen für eine Verfolgung der dem jeweiligen VLAN zugeordneten Pfade nur in Bezug auf ausgehende Frames zur Festlegung der VLAN-Port-Betriebsmodi gesetzt. Anhand dieser VLAN-Port-Konfigurationsmarken werden die Verfolgung der dem jeweiligen VLAN zugeordneten Pfade und eine auf der Festlegung der VLAN-Port-Betriebsmodi basierende automatische Konfiguration der von diesen Pfaden umfassten Ports gesteuert.

Im vorliegenden Ausführungsbeispiel erfolgt die Verfolgung der dem jeweiligen VLAN zugeordneten Pfade zur Festlegung der VLAN-Port-Betriebsmodi ausgehend von jedem dem jeweiligen VLAN zugeordneten Kommunikationsendgerät. Für ein VLAN ohne zugeordnete Kommunikationsendgeräte erfolgt die Verfolgung der dem jeweiligen VLAN zugeordneten Pfade zur Festlegung der VLAN-Port-Betriebsmodi ausgehend von zumindest einem ausgewählten, dem jeweiligen VLAN zugeordneten Switch oder Router. Dabei kann für die Verfolgung der dem jeweiligen VLAN zugeordneten Pfade ein Switch oder Router auf einer niedrigsten topologischen Ebene des Kommunikationsnetzes innerhalb der jeweiligen VLAN-Segmentgrenze ausgewählt werden.

Zur Festlegung von VLAN-Segmentgrenzen für die Automatisierungszellen 101-103, denen jeweils ein separates VLAN zugeordnet sein soll, wird im vorliegenden Ausführungsbeispiel jeweils eine erste VLAN-Port-Konfigurationsmarke EOV
- am zweiten Port 42 des zweiten Routers 4,
- am zweiten Port 32 des zweiten Switchs 3 und
- am dritten Port 33 des zweiten Switchs 3 gesetzt (siehe Figur 1). Dementsprechend werden ein VLAN 1 für das übergeordnete Netzsegment 100, ein VLAN 10 für die erste Automatisierungszelle 101, ein VLAN 20 für die zweite Automatisierungszelle 200 und ein VLAN 30 für die dritte Automatisierungszelle 103 eingerichtet.

Da eine Verfolgung der Pfade für VLAN 10, VLAN 20, VLAN 30 vorzugsweise am jeweils nächsten topologisch übergeordneten Router enden soll, wird im vorliegenden Ausführungsbeispiel jeweils eine zweite VLAN-Port-Konfigurationsmarke VCT
- an beiden Ports 11-12 des ersten Routers 1 und
- am ersten Port 41 des zweiten Routers 2
gesetzt. Darüber hinaus soll keine Verfolgung der Pfade für VLAN 20, VLAN 30 in topologisch untergeordnete Netzsegmente erfolgen. Aus diesem Grund ist entsprechend Figur 1 am dritten Port 23 des ersten Switchs 2 eine dritte VLAN-Port-Konfigurationsmarke VCEO gesetzt.

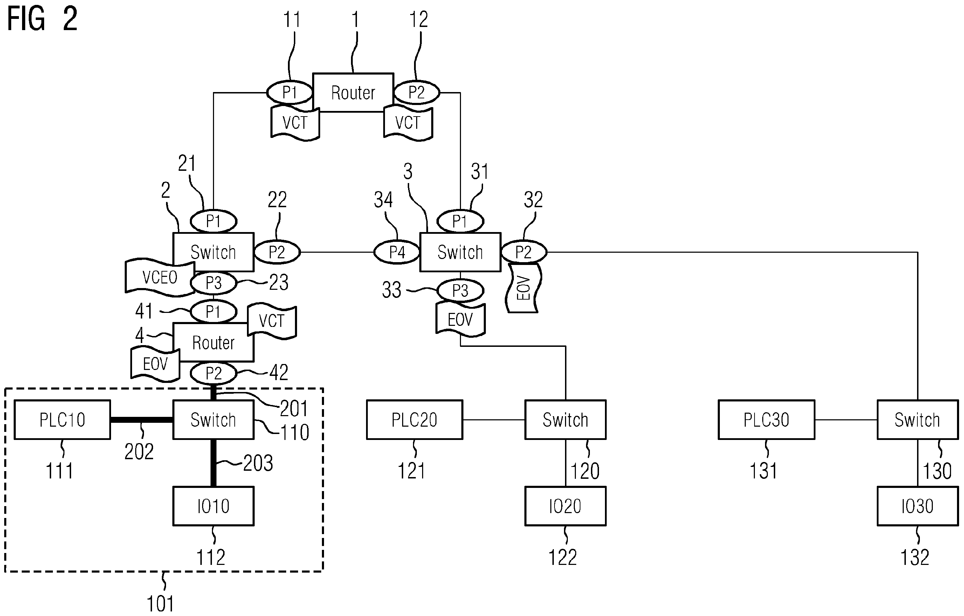

Mit den gesetzten VLAN-Port-Konfigurationsmarken ergeben sich die in den Figuren 2-5 für eine Konfiguration von VLAN 10, VLAN 20, VLAN 30 und VLAN 1 durch dicke Linien hervorgehobenen zu verfolgenden Pfade. Bei der Konfiguration von VLAN 10 umfassen die Pfade gemäß Figur 2 eine Übertragungsstrecke 201 zwischen dem zweiten Router 4 und dem Switch 110 der ersten Automatisierungszelle 101, eine Übertragungsstrecke 202 zwischen dem Switch 110 und der speicherprogrammierbaren Steuerung 111 der ersten Automatisierungszelle 101 und eine Übertragungsstrecke 203 zwischen dem Switch 110 und der Eingabe/Ausgabe-Einheit 112 der ersten Automatisierungszelle 101.

Da die Verfolgung der dem jeweiligen VLAN zugeordneten Pfade zur Festlegung der VLAN-Port-Betriebsmodi entsprechend obigen Ausführungen ausgehend von jedem dem jeweiligen VLAN zugeordneten Kommunikationsendgerät erfolgt, werden die in Figur 2 hervorgehobenen Pfade zur Konfiguration von VLAN 10 sowohl ausgehend von der speicherprogrammierbaren Steuerung 111 als auch ausgehend von der Eingabe/Ausgabe-Einheit 112 der ersten Automatisierungszelle 101 verfolgt.

Initial wird VLAN 1 für das übergeordnete Netzsegment 100 an sämtlichen Ports der Router 1, 4 und Switche 2-3 innerhalb der durch die ersten VLAN-Port-Konfigurationsmarken EOV für VLAN 1 festgelegten VLAN-Segmentgrenzen im Untagged-Modus (U) konfiguriert, und zwar sowohl für eingehende Frames (E) als auch für ausgehende Frames (A).

Für den ersten Router 1 ergibt sich für seine Ports 11-12 (P1-P2) nach initialer Konfiguration von VLAN 1 und abgeschlossener Konfiguration von VLAN 10 folgende VLAN-Konfigurationstabelle (E=eingehende/Ingress Frames, A=ausgehende/ Egress Frames):

| Router 1 | P1 | | P2 | |
|---|---|---|---|---|
| | E | A | E | A |
| VLAN 1 | U | U | U | U |

Über den ersten Router 1 werden entsprechend Figur 2 keine Frames übermittelt, die VLAN 10 zugeordnet sind. Daher umfasst obige VLAN-Konfigurationstabelle keinen Eintrag für VLAN 10. Dies trifft auch auf die nachfolgend dargestellten VLAN-Konfigurationstabellen für den ersten Switch 2 und den zweiten Switch 3 zu.

Für den ersten Switch 2 ergibt sich für seine Ports 21-23 (P1-P3) nach initialer Konfiguration von VLAN 1 und abgeschlossener Konfiguration von VLAN 10 folgende VLAN-Konfigurationstabelle:

| Switch 2 | P1 | | P2 | | P3 | |
|---|---|---|---|---|---|---|
| | E | A | E | A | E | A |
| VLAN 1 | U | U | U | U | U | U |

Für den zweiten Switch 3 ergibt sich für seine Ports 31-34 (P1-P4) nach initialer Konfiguration von VLAN 1 und abgeschlossener Konfiguration von VLAN 10 folgende VLAN-Konfigurationstabelle:

| Switch 3 | P1 | | P2 | | P3 | | P4 | |
|---|---|---|---|---|---|---|---|---|
| | E | A | E | A | E | A | E | A |
| VLAN 1 | U | U | U | U | U | U | U | U |

Grundsätzlich wird ein VLAN, das Kommunikationsendgeräte ohne VLAN-Funktionalität umfasst und an dessen VLAN-Segmentgrenze dem VLAN zugeordnete Frames über einen Port weitergeleitet werden, an dem eine erste VLAN-Port-Konfigurationsmarke EOV gesetzt ist, am jeweiligen Port für eingehende und ausgehende Frames im Untagged-Modus (U) konfiguriert wird. Dabei wird am jeweiligen Port, an dem an dem eine erste VLAN-Port-Konfigurationsmarke EOV gesetzt ist, stets nur ein VLAN für eingehende Frames (E) und ausgehende Frames (A) im Untagged-Modus (U) konfiguriert. Dementsprechend wird VLAN 10 am zweiten Port 42 des zweiten Routers 4 für eingehende Frames (E) und für ausgehende Frames (A) im Untagged-Modus (U) konfiguriert.

Für den zweiten Router 4 ergibt sich für seine Ports 41-42 (P1-P2) nach initialer Konfiguration von VLAN 1 und abgeschlossener Konfiguration von VLAN 10 folgende VLAN-Konfigurationstabelle:

| Router 4 | P1 | | P2 | |
|---|---|---|---|---|
| | E | A | E | A |
| VLAN 1 | U | U | | |
| VLAN 10 | | | U | U |

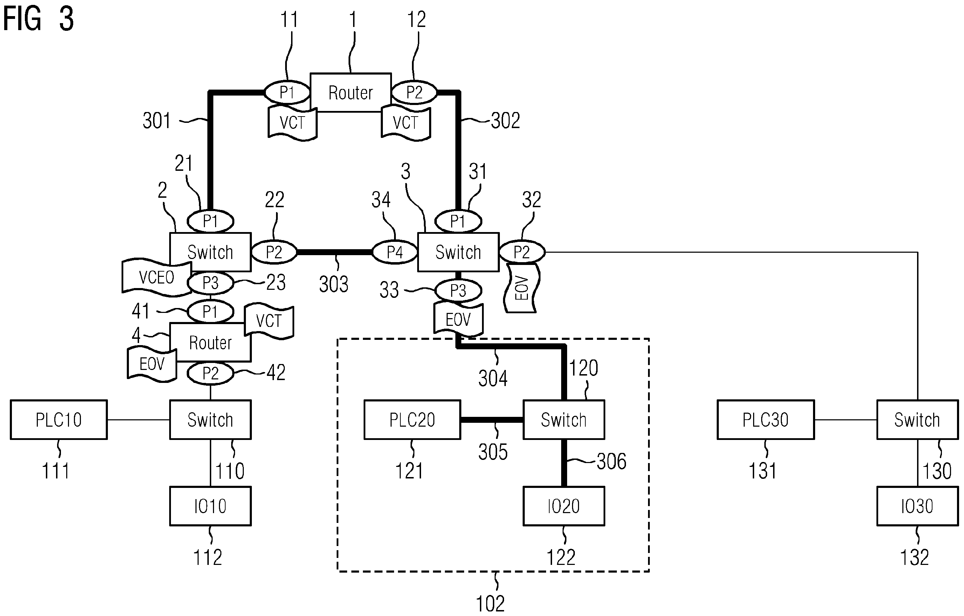

Bei der Konfiguration von VLAN 20 umfassen die zu verfolgenden Pfade gemäß Figur 3 zwei Übertragungsstrecken 301, 302 vom ersten Router 1 zum ersten Switch 2 bzw. zweiten Switch 3, eine Übertragungsstrecke 303 zwischen dem ersten Switch 2 und dem zweiten Switch 3, eine Übertragungsstrecke 304 zwischen dem zweiten Switch 3 und dem Switch 120 der zweiten Automatisierungszelle 102, eine Übertragungsstrecke 305 zwischen dem Switch 120 und der speicherprogrammierbaren Steuerung 121 der zweiten Automatisierungszelle 102 und eine Übertragungsstrecke 306 zwischen dem Switch 120 und der Eingabe/Ausgabe-Einheit 122 der zweiten Automatisierungszelle 102.

Da die Verfolgung der dem jeweiligen VLAN zugeordneten Pfade zur Festlegung der VLAN-Port-Betriebsmodi entsprechend obigen Ausführungen ausgehend von jedem dem jeweiligen VLAN zugeordneten Kommunikationsendgerät erfolgt, werden die in Figur 3 hervorgehobenen Pfade zur Konfiguration von VLAN 20 sowohl ausgehend von der speicherprogrammierbaren Steuerung 121 als auch ausgehend von der Eingabe/Ausgabe-Einheit 122 der zweiten Automatisierungszelle 102 verfolgt.

Grundsätzlich wird jedes VLAN, dessen zugeordnete Frames über einen Port weitergeleitet werden, an dem eine zweite VLAN-Port-Konfigurationsmarke VCT gesetzt ist, am jeweiligen Port für ausgehende Frames im Trunk-Modus konfiguriert. Dementsprechend wird VLAN 20 an beiden Ports 11-12 des ersten Routers 1 für ausgehende Frames (A) im Trunk-Modus (T) konfiguriert. Dies hat auch zur Folge, dass die Konfiguration von VLAN 1 an diesen Ports 11-12 für ausgehende Frames (A) in den Trunk-Modus (T) geändert wird.

Für den ersten Router 1 ergibt sich für seine Ports 11-12 (P1-P2) nach initialer Konfiguration von VLAN 1 sowie abgeschlossener Konfiguration von VLAN 10 und VLAN 20 folgende VLAN-Konfigurationstabelle:

| Router 1 | P1 | | P2 | |
|---|---|---|---|---|
| | E | A | E | A |
| VLAN 1 | U | T | U | T |
| VLAN 20 | | T | | T |

Da VLAN 20 zugeordnete eingehende Frames (E) an keinem der Ports 11-12 gefiltert werden, enthält obige VLAN-Konfigurationstabelle für den ersten Router 1 diesbezüglich keine Angaben. Für nachfolgende VLAN-Konfigurationstabellen und nicht gefilterte eingehende Frames (E) gilt dies ebenfalls.

Grundsätzlich wird jedes VLAN, das keine zugeordneten eingehenden Frames an einem Port aufweist, an dem eine dritte VLAN-Port-Konfigurationsmarke VCEO gesetzt ist, am jeweiligen Port für ausgehende Frames (A) im Forbidden-Modus (F) konfiguriert. Dagegen wird jedes VLAN, das zugeordnete eingehende Frames (E) an einem Port aufweist, an dem eine dritte VLAN-Port-Konfigurationsmarke VCEO gesetzt ist, am jeweiligen Port für ausgehende Frames (A) im Trunk-Modus (T) konfiguriert. Dementsprechend wird VLAN 20 am dritten Port 23 des ersten Switchs 2 für ausgehende Frames (A) im Forbidden-Modus (F) konfiguriert, während VLAN 1 an diesem Port 23 für ausgehende Frames (A) im Trunk-Modus (T) konfiguriert wird.

Die Ports 21-22 des ersten Switchs 2 sind gemäß Figur 3 von den Pfaden für VLAN 20 umfasst und werden daher für dieses VLAN in Bezug auf ausgehende Frames (A) im Trunk-Modus (T) konfiguriert. Dies hat auch zur Folge, dass die Konfiguration von VLAN 1 an diesen Ports 21-22 für ausgehende Frames (A) in den Trunk-Modus (T) geändert wird.

Für den ersten Switch 2 ergibt sich für seine Ports 21-23 (P1-P3) nach initialer Konfiguration von VLAN 1 sowie abgeschlossener Konfiguration von VLAN 10 und VLAN 20 folgende geänderte VLAN-Konfigurationstabelle:

| Switch 2 | P1 | | P2 | | P3 | |
|---|---|---|---|---|---|---|
| | E | A | E | A | E | A |
| VLAN 1 | U | T | U | T | U | T |
| VLAN 20 | | T | | T | | F |

Da eine Konfiguration für ein VLAN, das Kommunikationsendgeräte ohne VLAN-Funktionalität umfasst und an dessen VLAN-Segmentgrenze dem VLAN zugeordnete Frames über einen Port weitergeleitet werden, an dem eine erste VLAN-Port-Konfigurationsmarke EOV gesetzt ist, am jeweiligen Port für eingehende und ausgehende Frames entsprechend obigen Ausführungen im Untagged-Modus (U) erfolgt, wird VLAN 20 am dritten Port 33 des zweiten Switchs 3 für eingehende Frames (E) und für ausgehende Frames (A) im Untagged-Modus (U) konfiguriert.

Die Ports 31, 34 des zweiten Switchs 3 sind gemäß Figur 3 von den Pfaden für VLAN 20 umfasst und werden daher für dieses VLAN in Bezug auf ausgehende Frames (A) im Trunk-Modus (T) konfiguriert. Dies hat auch zur Folge, dass die Konfiguration von VLAN 1 an diesen Ports 31, 34 für ausgehende Frames (A) in den Trunk-Modus (T) geändert wird.

Für den zweiten Switch 3 ergibt sich für seine Ports 31-34 (P1-P4) nach initialer Konfiguration von VLAN 1 sowie abgeschlossener Konfiguration von VLAN 10 und VLAN 20 folgende geänderte VLAN-Konfigurationstabelle:

| Switch 3 | P1 | | P2 | | P3 | | P4 | |
|---|---|---|---|---|---|---|---|---|
| | E | A | E | A | E | A | E | A |
| VLAN 1 | U | T | U | U | | | U | T |
| VLAN 20 | | T | | | U | U | | T |

Für den zweiten Router 4 ergibt sich für seine Ports 41-42 (P1-P2) nach initialer Konfiguration von VLAN 1 sowie abgeschlossener Konfiguration von VLAN 10 und VLAN 20 folgende unveränderte VLAN-Konfigurationstabelle:

| Router 4 | P1 | | P2 | |
|---|---|---|---|---|
| | E | A | E | A |
| VLAN 1 | U | U | | |
| VLAN 10 | | | U | U |

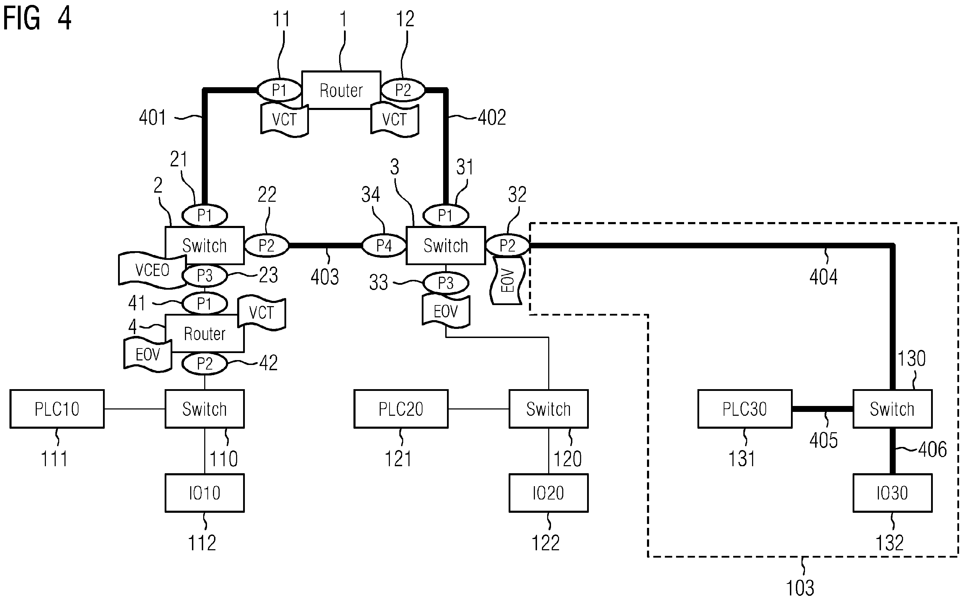

Bei der Konfiguration von VLAN 30 umfassen die zu verfolgenden Pfade gemäß Figur 4 zwei Übertragungsstrecken 401, 402 vom ersten Router 1 zum ersten Switch 2 bzw. zweiten Switch 3, eine Übertragungsstrecke 403 zwischen dem ersten Switch 2 und dem zweiten Switch 3, eine Übertragungsstrecke 404 zwischen dem zweiten Switch 3 und dem Switch 130 der dritten Automatisierungszelle 103, eine Übertragungsstrecke 405 zwischen dem Switch 130 und der speicherprogrammierbaren Steuerung 131 der dritten Automatisierungszelle 103 und eine Übertragungsstrecke 406 zwischen dem Switch 130 und der Eingabe/Ausgabe-Einheit 132 der dritten Automatisierungszelle 103.

Da die Verfolgung der dem jeweiligen VLAN zugeordneten Pfade zur Festlegung der VLAN-Port-Betriebsmodi entsprechend obigen Ausführungen ausgehend von jedem dem jeweiligen VLAN zugeordneten Kommunikationsendgerät erfolgt, werden die in Figur 4 hervorgehobenen Pfade zur Konfiguration von VLAN 30 sowohl ausgehend von der speicherprogrammierbaren Steuerung 131 als auch ausgehend von der Eingabe/Ausgabe-Einheit 132 der dritten Automatisierungszelle 103 verfolgt.

Da eine Konfiguration für jedes VLAN, dessen zugeordnete Frames über einen Port weitergeleitet werden, an dem eine zweite VLAN-Port-Konfigurationsmarke VCT gesetzt ist, am jeweiligen Port für ausgehende Frames entsprechend obigen Ausführungen im Trunk-Modus erfolgt, wird VLAN 30 an beiden Ports 11-12 des ersten Routers 1 für ausgehende Frames (A) im Trunk-Modus (T) konfiguriert.

Für den ersten Router 1 ergibt sich für seine Ports 11-12 (P1-P2) nach initialer Konfiguration von VLAN 1 sowie abgeschlossener Konfiguration von VLAN 10, VLAN 20 und VLAN30 folgende geänderte VLAN-Konfigurationstabelle:

| Router 1 | P1 | | P2 | |
|---|---|---|---|---|
| | E | A | E | A |
| VLAN 1 | U | T | U | T |
| VLAN 20 | | T | | T |
| VLAN 30 | | T | | T |

Da eine Konfiguration für jedes VLAN, das keine zugeordneten eingehenden Frames an einem Port aufweist, an dem eine dritte VLAN-Port-Konfigurationsmarke VCEO gesetzt ist, am jeweiligen Port für ausgehende Frames (A) entsprechend obigen Ausführungen im Forbidden-Modus (F) erfolgt, wird VLAN 30 am dritten Port 23 des ersten Switchs 2 für ausgehende Frames (A) im Forbidden-Modus (F) konfiguriert.

Die Ports 21-22 des ersten Switchs 2 sind gemäß Figur 4 von den Pfaden für VLAN 30 umfasst. Dementsprechend werden die Ports 21-22 des ersten Switchs 2 für dieses VLAN in Bezug auf ausgehende Frames (A) im Trunk-Modus (T) konfiguriert.

Für den ersten Switch 2 ergibt sich für seine Ports 21-23 (P1-P3) nach initialer Konfiguration von VLAN 1 sowie abgeschlossener Konfiguration von VLAN 10, VLAN 20 und VLAN 30 folgende geänderte VLAN-Konfigurationstabelle:

| Switch 2 | P1 | | P2 | | P3 | |
|---|---|---|---|---|---|---|
| | E | A | E | A | E | A |
| VLAN 1 | U | T | U | T | U | T |
| VLAN 20 | | T | | T | | F |
| VLAN 30 | | T | | T | | F |

Da eine Konfiguration für ein VLAN, das Kommunikationsendgeräte ohne VLAN-Funktionalität umfasst und an dessen VLAN-Segmentgrenze dem VLAN zugeordnete Frames über einen Port weitergeleitet werden, an dem eine erste VLAN-Port-Konfigurationsmarke EOV gesetzt ist, am jeweiligen Port für eingehende und ausgehende Frames entsprechend obigen Ausführungen im Untagged-Modus (U) erfolgt, wird VLAN 30 am zweiten Port 32 des zweiten Switchs 3 für eingehende Frames (E) und für ausgehende Frames (A) im Untagged-Modus (U) konfiguriert.

Die Ports 31, 34 des zweiten Switchs 3 sind gemäß Figur 4 von den Pfaden für VLAN 30 umfasst. Dementsprechend werden die Ports 31, 34 des zweiten Switchs 3 für dieses VLAN in Bezug auf ausgehende Frames (A) im Trunk-Modus (T) konfiguriert. Für den zweiten Switch 3 ergibt sich für seine Ports 31-34 (P1-P4) nach initialer Konfiguration von VLAN 1 sowie abgeschlossener Konfiguration von VLAN 10, VLAN 20 und VLAN 30 folgende geänderte VLAN-Konfigurationstabelle:

| Switch 3 | P1 | | P2 | | P3 | | P4 | |
|---|---|---|---|---|---|---|---|---|
| | E | A | E | A | E | A | E | A |
| VLAN 1 | U | T | | | | | U | T |
| VLAN 20 | | T | | | U | U | | T |
| VLAN 30 | | T | U | U | | | | T |

Für den zweiten Router 4 ergibt sich für seine Ports 41-42 (P1-P2) nach initialer Konfiguration von VLAN 1 sowie abgeschlossener Konfiguration von VLAN 10, VLAN 20 und VLAN 30 folgende unveränderte VLAN-Konfigurationstabelle:

| Router 4 | P1 | | P2 | |
|---|---|---|---|---|
| | E | A | E | A |
| VLAN 1 | U | U | | |
| VLAN 10 | | | U | U |

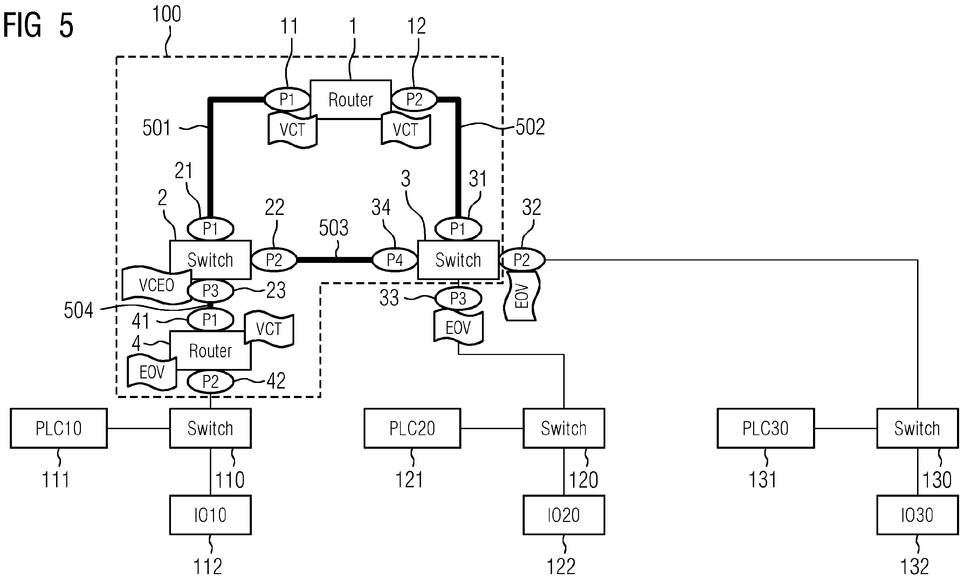

Bei der abschließenden Konfiguration von VLAN 1 umfassen die zu verfolgenden Pfade gemäß Figur 5 zwei Übertragungsstrecken 501, 502 vom ersten Router 1 zum ersten Switch 2 bzw. zweiten Switch 3, eine Übertragungsstrecke 503 zwischen dem ersten Switch 2 und dem zweiten Switch 3 und eine Übertragungsstrecke 504 zwischen dem ersten Switch 2 und dem zweiten Router 4.

Entsprechend obigen Ausführungen erfolgt bei einem VLAN ohne zugeordnete Kommunikationsendgeräte die Verfolgung der dem jeweiligen VLAN zugeordneten Pfade zur Festlegung der VLAN-Port-Betriebsmodi ausgehend von zumindest einem ausgewählten, dem jeweiligen VLAN zugeordneten Switch oder Router, insbesondere von einem Switch oder Router auf einer niedrigsten topologischen Ebene des Kommunikationsnetzes innerhalb der jeweiligen VLAN-Segmentgrenze. Im vorliegenden Ausführungsbeispiel ist dies bei VLAN 1 der zweite Router 4.

Bei der Verfolgung der in Figur 5 hervorgehobenen Pfade zur Konfiguration von VLAN 1 ergeben sich im Vergleich zu vorangehenden Ausführungen keine wesentlichen Änderungen mehr. Es ist lediglich zu berücksichtigen, dass die Verfolgung der Pfade zur Konfiguration von VLAN 1 nicht ausgehend von einem Kommunikationsendgerät ohne VLAN-Funktionalität erfolgt, sondern ausgehend vom zweiten Router 4 mit VLAN-Funktionalität. Dementsprechend wird die Konfiguration für VLAN 1 am ersten Port 41 des zweiten Routers 4 in Bezug auf ausgehende Frames (A) in den Trunk-Modus (T) geändert.

Für den ersten Router 1 ergibt sich für seine Ports 11-12 (P1-P2) nach abgeschlossener Konfiguration von VLAN 1, VLAN 10, VLAN 20 und VLAN30 folgende unveränderte VLAN-Konfigurationstabelle:

| Router 1 | P1 | | P2 | |
|---|---|---|---|---|
| | E | A | E | A |
| VLAN 1 | U | T | U | T |
| VLAN 20 | | T | | T |
| VLAN 30 | | T | | T |

Für den ersten Switch 2 ergibt sich für seine Ports 21-23 (P1-P3) nach abgeschlossener Konfiguration von VLAN 1, VLAN 10, VLAN 20 und VLAN30 folgende unveränderte VLAN-Konfigurationstabelle:

| Switch 2 | P1 | | P2 | | P3 | |
|---|---|---|---|---|---|---|
| | E | A | E | A | E | A |
| VLAN 1 | U | T | U | T | U | T |
| VLAN 20 | | T | | T | | F |
| VLAN 30 | | T | | T | | F |

Für den zweiten Switch 3 ergibt sich für seine Ports 31-34 (P1-P4) nach abgeschlossener Konfiguration von VLAN 1, VLAN 10, VLAN 20 und VLAN30 folgende unveränderte VLAN-Konfigurationstabelle:

| Switch 3 | P1 | | P2 | | P3 | | P4 | |
|---|---|---|---|---|---|---|---|---|
| | E | A | E | A | E | A | E | A |
| VLAN 1 | U | T | | | | | U | T |
| VLAN 20 | | T | | | U | U | | T |
| VLAN 30 | | T | U | U | | | | T |

Port 41 des zweiten Routers 4 ist gemäß Figur 5 von den Pfaden für VLAN 1 umfasst, und der zweite Router 4 stellt kein Kommunikationsgerät ohne VLAN-Funktionalität dar. Daher wird Port 41 des zweiten Routers 4 für VLAN 1 in Bezug auf ausgehende Frames (A) im Trunk-Modus (T) konfiguriert.

Für den zweiten Router 4 ergibt sich für seine Ports 41-42 (P1-P2) nach abgeschlossener Konfiguration von VLAN 1, VLAN 10, VLAN 20 und VLAN30 folgende geänderte VLAN-Konfigurationstabelle:

| Router 4 | P1 | | P2 | |
|---|---|---|---|---|
| | E | A | E | A |
| VLAN 1 | U | T | | |
| VLAN 10 | | | U | U |

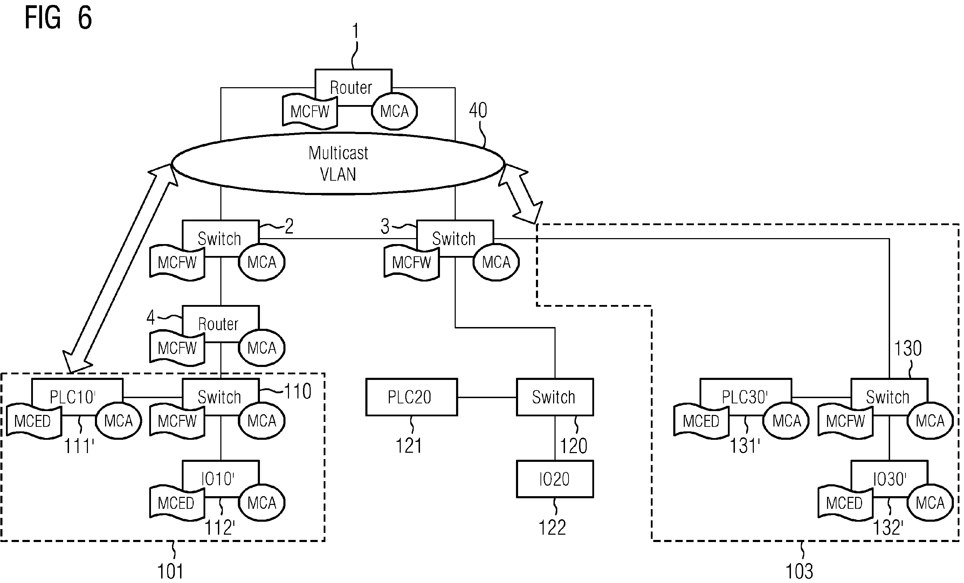

Zusätzlich zu den VLAN-Port-Konfigurationsmarken EOV, VCT, VCEO können entsprechend Figur 6 VLAN-Multicast-Konfigurationsmarken gesetzt werden, um eine automatisierte Konfiguration eines separaten Multicast-VLAN zur Übermittlung von Multicast-Frames innerhalb eines mehrere VLANs umfassenden Multicast-Bereichs zu steuern. Zur Weiterleitung von Multicast-Frames zwischen Kommunikationsendgeräten in zwei unterschiedlichen VLANs wird ein die beiden VLANs miteinander koppelndes Multicast-VLAN eingerichtet, das weiterleitende Kommunikationsgeräte in beiden VLANs, Kommunikationsendgeräte in beiden VLANs und weiterleitende Kommunikationsgeräte entlang zumindest eines Pfads zwischen den beiden VLANs umfasst. Grundsätzlich wird das die beiden VLANs koppelnde Multicast-VLAN am jeweiligen Port der die Multicast-Frames weiterleitenden Kommunikationsgeräte für ausgehende Multicast-Frames im Trunk-Modus (T) konfiguriert.

Im vorliegenden Ausführungsbeispiel soll ein Austausch von Multicast-Datenverkehr zwischen Kommunikationsendgeräten 111', 112' in der ersten Automatisierungszelle 101 einerseits und Kommunikationsendgeräten 131', 132' in der dritten Automatisierungszelle 103 andererseits ermöglicht werden. Zumindest senderseitig weisen die Kommunikationsendgeräte 111`, 112', 131', 132' hierfür VLAN-Funktionalität aufweisen. Ein Austausch von Multicast-Datenverkehr zwischen Kommunikationsendgeräten, die zunächst unterschiedlichen VLANs zugeordnet sind, kann beispielsweise gewünscht sein, wenn GOOSE (IEC 61850-8-1) oder OPC UA Publisher und Subscriber Automatisierungszellen-übergreifend miteinander kommunizieren sollen.

Mittels erster VLAN-Multicast-Konfigurationsmarken MCA werden VLAN-Segmentgrenzen für eine Übermittlung von Multicast-Frames innerhalb eines mehrere VLANs umfassenden Multicast-Bereichs festgelegt. Außerdem werden mittels zweiter VLAN-Multicast-Konfigurationsmarken MCFD Multicast-Frames innerhalb des Multicast-Bereichs weiterleitende Kommunikationsgeräte 1-4, 110, 130 festgelegt. Im vorliegenden Ausführungsbeispiel sind dies der erste Router 1, der erste Switch 2, der zweite Switch 3, der Switch 110 der ersten Automatisierungszelle und der Switch 130 der dritten Automatisierungszelle 103.

Darüber hinaus werden mittels dritter VLAN-Multicast-Konfigurationsmarken MCED Multicast-Frames sendende bzw. empfangende Kommunikationsendgeräte 111', 112', 131', 132' innerhalb des jeweiligen Multicast-Bereichs festgelegt. Im vorliegenden Ausführungsbeispiel sind dies die speicherprogrammierbare Steuerung 111' und die Eingabe/Ausgabe-Einheit 112' der ersten Automatisierungszelle 101 sowie die speicherprogrammierbare Steuerung 131` und die Eingabe/Ausgabe-Einheit 132` der dritten Automatisierungszelle 103. Anhand der VLAN-Multicast-Konfigurationsmarken erfolgt für jeden Multicast-Bereich jeweils eine Festlegung des VLAN-Port-Betriebsmodus der dem jeweiligen Multicast-Bereich zugeordneten Ports der Multicast-Frames weiterleitenden Kommunikationsgeräte.

Für den entsprechend den ersten VLAN-Multicast-Konfigurationsmarken MCA festgelegten Multicast-Bereich wird ein separates Multicast-VLAN 40 eingerichtet. Ports zwischen entsprechend den zweiten VLAN-Multicast-Konfigurationsmarken MCFD festgelegten, demselben Multicast-Bereich zugeordneten Multicast-Frames weiterleitenden Kommunikationsgeräten 1-4, 110, 130 werden für das Multicast-VLAN 40 grundsätzlich im Trunk-Modus (T) konfiguriert. Darüber werden Ports an Multicast-Frames weiterleitenden Kommunikationsgeräten 110, 130, an die entsprechend den dritten VLAN-Multicast-Konfigurationsmarken MCED festgelegte, demselben Multicast-Bereich zugeordnete Kommunikationsendgeräte 111', 112', 131', 132' angeschlossen sind, werden für das Multicast-VLAN 40 im Trunk-Modus (T) konfiguriert. Vorzugsweise werden Ports an Multicast-Frames weiterleitenden Kommunikationsgeräten, an die keine Kommunikationsendgeräte angeschlossen sind, die durch dritte VLAN-Multicast-Konfigurationsmarken MCED festgelegt bzw. einem Multicast-Bereich zugeordnet sind, werden für das jeweilige Multicast-VLAN im Forbidden-Modus (F) konfiguriert. Im vorliegenden Ausführungsbeispiel existieren jedoch keine solchen Ports.

## Patentansprüche

1. Verfahren zur automatisierten Konfiguration eines mehrere Virtual Local Area Networks umfassenden Kommunikationsnetzes, bei dem
- für jedes Virtual Local Area Networks, VLAN, ausgehend von Kommunikationsendgeräten (111-112, 121-122, 131-132) an Ports von Switchen (2-3, 110, 120, 130) und/oder Routern (1,4) entlang dem jeweiligen VLAN zugeordneten Pfaden (201-203, 301-306, 401-406, 501-504) jeweils eine Festlegung eines VLAN-Port-Betriebsmodus in Abhängigkeit einer Nutzung des jeweiligen Ports durch das jeweilige VLAN erfolgt,
- mittels erster VLAN-Port-Konfigurationsmarken (EOV) VLAN-Segmentgrenzen festgelegt werden, wobei eingehende und ausgehende Frames am jeweiligen Port demselben VLAN zugeordnet werden,
- mittels zweiter VLAN-Port-Konfigurationsmarken (VCT) Grenzen für eine Verfolgung der dem jeweiligen VLAN zugeordneten Pfade zur Festlegung der VLAN-Port-Betriebsmodi gesetzt werden,
- mittels dritter VLAN-Port-Konfigurationsmarken (VCEO) Grenzen für eine Verfolgung der dem jeweiligen VLAN zugeordneten Pfade nur in Bezug auf ausgehende Frames zur Festlegung der VLAN-Port-Betriebsmodi gesetzt werden,
- die Verfolgung der dem jeweiligen VLAN zugeordneten Pfade und eine auf der Festlegung der VLAN-Port-Betriebsmodi basierende Konfiguration der von diesen Pfaden umfassten Ports anhand der VLAN-Port-Konfigurationsmarken gesteuert werden.

2. Verfahren nach Anspruch 1,
bei dem die VLAN-Port-Betriebsmodi jeweils zumindest einen Trunk-Modus und einen Untagged-Modus umfassen, bei dem Frames, die einen dem jeweiligen VLAN zugeordneten VLAN-Identifikator umfassen, über einen Port weitergeleitet werden, wenn dieser für das jeweilige VLAN im Trunk-Modus konfiguriert ist, bei dem eingehende Frames, die keinen VLAN-Identifikator umfassen, unter Einfügung eines VLAN-Identifikators über einen Port weitergeleitet werden, wenn dieser für das jeweilige VLAN in Bezug auf eingehende Frames im Untagged-Modus konfiguriert ist, und bei dem ausgehende Frames, die einen dem jeweiligen VLAN zugeordneten VLAN-Identifikator umfassen, unter Entfernung des VLAN-Identifikators über einen Port weitergeleitet werden, wenn dieser für das jeweilige VLAN in Bezug auf ausgehende Frames im Untagged-Modus konfiguriert ist.

3. Verfahren nach Anspruch 2,
bei dem ein VLAN, das Kommunikationsendgeräte (111-112, 121-122, 131-132) ohne VLAN-Funktionalität umfasst und an dessen VLAN-Segmentgrenze dem VLAN zugeordnete Frames über einen Port weitergeleitet werden, an dem eine erste VLAN-Port-Konfigurationsmarke (EOV) gesetzt ist, am jeweiligen Port für eingehende und ausgehende Frames im Untagged-Modus konfiguriert wird.

4. Verfahren nach Anspruch 3,
bei dem am jeweiligen Port, an dem an dem eine erste VLAN-Port-Konfigurationsmarke (EOV) gesetzt ist, nur ein VLAN für eingehende und ausgehende Frames im Untagged-Modus konfiguriert wird.

5. Verfahren nach einem der Ansprüche 2 bis 4,
bei dem jedes VLAN, dessen zugeordnete Frames über einen Port weitergeleitet werden, an dem eine zweite VLAN-Port-Konfigurationsmarke (VCT) gesetzt ist, am jeweiligen Port für ausgehende Frames im Trunk-Modus konfiguriert wird.

6. Verfahren nach einem der Ansprüche 2 bis 5,
bei dem die VLAN-Port-Betriebsmodi jeweils zusätzlich einen Forbidden-Modus umfassen, bei dem eine Weiterleitung von eingehenden oder ausgehenden Frames, die einen dem jeweiligen VLAN zugeordneten VLAN-Identifikator umfassen, über einen Port dauerhaft, nicht dynamisch änderbar gesperrt ist, wenn dieser für das jeweilige VLAN in Bezug auf eingehende oder ausgehende Frames im Forbidden-Modus konfiguriert ist, und bei dem jedes VLAN, das keine zugeordneten eingehenden Frames an einem Port aufweist, an dem eine dritte VLAN-Port-Konfigurationsmarke (VCEO) gesetzt ist, am jeweiligen Port für ausgehende Frames im Forbidden-Modus konfiguriert wird.

7. Verfahren nach einem der Ansprüche 2 bis 6,
bei dem jedes VLAN, das zugeordnete eingehende Frames an einem Port aufweist, an dem eine dritte VLAN-Port-Konfigurationsmarke (VCEO) gesetzt ist, am jeweiligen Port für ausgehende Frames im Trunk-Modus konfiguriert wird.

8. Verfahren nach einem der Ansprüche 2 bis 7,
bei dem mittels erster VLAN-Multicast-Konfigurationsmarken (MCA) VLAN-Segmentgrenzen für eine Übermittlung von Multicast-Frames innerhalb eines mehrere VLANs umfassenden Multicast-Bereichs festgelegt werden, bei dem mittels zweiter VLAN-Multicast-Konfigurationsmarken (MCFD) Multicast-Frames innerhalb des Multicast-Bereichs weiterleitende Kommunikationsgeräte (1-4, 110, 130) festgelegt werden, bei dem mittels dritter VLAN-Multicast-Konfigurationsmarken (MCED) Multicast-Frames sendende und/oder empfangende Kommunikationsendgeräte (111`, 112', 131', 132') innerhalb des jeweiligen Multicast-Bereichs festgelegt werden und bei dem für jeden Multicast-Bereich anhand der VLAN-Multicast-Konfigurationsmarken jeweils eine Festlegung des VLAN-Port-Betriebsmodus der dem jeweiligen Multicast-Bereich zugeordneten Ports der Multicast-Frames weiterleitenden Kommunikationsgeräte erfolgt.

9. Verfahren nach Anspruch 8,
bei dem für den entsprechend den ersten VLAN-Multicast-Konfigurationsmarken (MCA) festgelegten Multicast-Bereich zumindest ein separates Multicast-VLAN (40) eingerichtet wird, bei dem Ports zwischen entsprechend den zweiten VLAN-Multicast-Konfigurationsmarken (MCFD) festgelegten, demselben Multicast-Bereich zugeordneten Multicast-Frames weiterleitenden Kommunikationsgeräten (1-4, 110, 130) für das jeweilige Multicast-VLAN im Trunk-Modus konfiguriert werden und bei dem Ports an Multicast-Frames weiterleitenden Kommunikationsgeräten (110, 130), an die entsprechend den dritten VLAN-Multicast-Konfigurationsmarken (MCED) festgelegte, demselben Multicast-Bereich zugeordnete Kommunikationsendgeräte (111`, 112', 131', 132') angeschlossen sind, für das jeweilige Multicast-VLAN (40) im Trunk-Modus konfiguriert werden.

10. Verfahren nach Anspruch 9,
bei dem die VLAN-Port-Betriebsmodi jeweils einen Forbidden-Modus umfassen und bei dem Ports an Multicast-Frames weiterleitenden Kommunikationsgeräten, an die keine Kommunikationsendgeräte angeschlossen sind, die durch dritte VLAN-Multicast-Konfigurationsmarken festgelegt und/oder einem Multicast-Bereich zugeordnet sind, für das jeweilige Multicast-VLAN im Forbidden-Modus konfiguriert werden.

11. Verfahren nach einem der Ansprüche 8 bis 10,
bei dem zur Weiterleitung von Multicast-Frames zwischen Kommunikationsendgeräten (111`, 112', 131', 132') in zwei unterschiedlichen VLANs ein die beiden VLANs miteinander koppelndes Multicast-VLAN (40) eingerichtet wird, das weiterleitende Kommunikationsgeräte (110, 130) in beiden VLANs, Kommunikationsendgeräte (111`, 112', 131', 132') in beiden VLANs und weiterleitende Kommunikationsgeräte (1-4) entlang zumindest eines Pfads zwischen den beiden VLANs umfasst, und bei dem das die beiden VLANs koppelnde Multicast-VLAN (40) am jeweiligen Port der die Multicast-Frames weiterleitenden Kommunikationsgeräte (1-4, 110, 130) für ausgehende Multicast-Frames im Trunk-Modus konfiguriert wird.

12. Verfahren nach einem der Ansprüche 1 bis 11,
bei dem einem VLAN zugeordnete Pfade ausgewählte Pfade umfassen, über die dem jeweiligen VLAN zugeordnete Frames übermittelt werden.

13. Verfahren nach einem der Ansprüche 1 bis 12,
bei dem die Verfolgung der dem jeweiligen VLAN zugeordneten Pfade zur Festlegung der VLAN-Port-Betriebsmodi ausgehend von jedem dem jeweiligen VLAN zugeordneten Kommunikationsendgerät erfolgt.

14. Verfahren nach einem der Ansprüche 1 bis 12,
bei dem die Verfolgung der dem jeweiligen VLAN zugeordneten Pfade zur Festlegung der VLAN-Port-Betriebsmodi für ein VLAN ohne zugeordnete Kommunikationsendgeräte ausgehend von zumindest einem ausgewählten, dem jeweiligen VLAN zugeordneten Switch oder Router erfolgt.

15. Verfahren nach Anspruch 14,
bei dem für die Verfolgung der dem jeweiligen VLAN zugeordneten Pfade ein Switch oder Router auf einer niedrigsten topologischen Ebene des Kommunikationsnetzes innerhalb der jeweiligen VLAN-Segmentgrenze ausgewählt wird.

16. Steuerungsprogramm zur Durchführung eines Verfahrens nach einem der Ansprüche 1 bis 15, wobei das Steuerungsprogramm in einem Arbeitsspeicher eines Rechners oder einer virtuellen Maschine ladbar ist und zumindest einen Codeabschnitt aufweist, bei dessen Ausführung
- für jedes Virtual Local Area Networks, VLAN, ausgehend von Kommunikationsendgeräten (111-112, 121-122, 131-132) an Ports von Switchen (2-3, 110, 120, 130) und/oder Routern (1,4) entlang dem jeweiligen VLAN zugeordneten Pfaden (201-203, 301-306, 401-406, 501-504) jeweils eine Festlegung eines VLAN-Port-Betriebsmodus in Abhängigkeit einer Nutzung des jeweiligen Ports durch das jeweilige VLAN erfolgt,
- mittels erster VLAN-Port-Konfigurationsmarken (EOV) VLAN-Segmentgrenzen festgelegt werden, wobei eingehende und ausgehende Frames am jeweiligen Port demselben VLAN zugeordnet werden,
- mittels zweiter VLAN-Port-Konfigurationsmarken (VCT) Grenzen für eine Verfolgung der dem jeweiligen VLAN zugeordneten Pfade zur Festlegung der VLAN-Port-Betriebsmodi gesetzt werden,
- mittels dritter VLAN-Port-Konfigurationsmarken (VCEO) Grenzen für eine Verfolgung der dem jeweiligen VLAN zugeordneten Pfade nur in Bezug auf ausgehende Frames zur Festlegung der VLAN-Port-Betriebsmodi gesetzt werden,
- die Verfolgung der dem jeweiligen VLAN zugeordneten Pfade und eine auf der Festlegung der VLAN-Port-Betriebsmodi basierende Konfiguration der von diesen Pfaden umfassten Ports anhand der VLAN-Port-Konfigurationsmarken gesteuert werden.
wenn das Steuerungsprogramm im Rechner oder in der virtuellen Maschine abläuft.

## Claims

1. Method for automated configuration of a communications network comprising multiple virtual local area networks, in which
- for each virtual local area network, VLAN, starting from communication terminals (111-112, 121-122, 131-132) on ports of switches (2-3, 110, 120, 130) and/or routers (1, 4) along paths (201-203, 301-306, 401-406, 501-504) assigned to the respective VLAN, a VLAN port operating mode is respectively defined depending on the usage of the respective port by the respective VLAN,
- using first VLAN port configuration tags (EOV), VLAN segment boundaries are defined, wherein inbound and outbound frames on the respective port are assigned to the same VLAN,
- using second VLAN port configuration tags (VCT), limits are set for tracing the paths assigned to the respective VLAN to define the VLAN port operating modes,
- using third VLAN port configuration tags (VCEO), limits for tracing the paths assigned to the respective VLAN are set only in respect of outbound frames to define the VLAN port operating modes,
- the tracing of the paths assigned to the respective VLAN, and a configuration of the ports included in these paths, which is based on the definition of the VLAN port operating modes, are controlled using the VLAN port configuration tags.

2. Method according to Claim 1,
in which the VLAN port operating modes each comprise at least a trunk mode and an untagged mode, in which frames comprising a VLAN identifier assigned to the respective VLAN are forwarded via a port if the port is configured for the respective VLAN in the trunk mode, in which inbound frames that do not include a VLAN identifier are forwarded via a port after inserting a VLAN identifier if the port is configured for the respective VLAN in untagged mode with respect to inbound frames, and in which outbound frames that comprise a VLAN identifier assigned to the respective VLAN are forwarded via a port after removing the VLAN identifier if the port is configured for the respective VLAN in untagged mode with respect to outbound frames.

3. Method according to Claim 2,
in which a VLAN, which comprises communication terminals (111-112, 121-122, 131-132) without VLAN functionality and at the VLAN segment boundary of which frames assigned to the VLAN are forwarded via a port at which a first VLAN port configuration tag (EOV) is set, is configured in untagged mode for inbound and outbound frames on the respective port.

4. Method according to Claim 3,
in which only one VLAN is configured in untagged mode for inbound and outbound frames on the respective port on which a first VLAN port configuration tag (EOV) is set.

5. Method according to any of Claims 2 to 4,
in which each VLAN, the assigned frames of which are forwarded via a port on which a second VLAN port configuration tag (VCT) is set, is configured in trunk mode for outbound frames on the respective port.

6. Method according to any of Claims 2 to 5,
in which the VLAN port operating modes each additionally comprise a forbidden mode, in which forwarding of inbound or outbound frames comprising a VLAN identifier assigned to the respective VLAN is permanently blocked in a non-dynamically modifiable manner via a port if this port is configured in forbidden mode for the respective VLAN with respect to inbound or outbound frames, and in which each VLAN that has no assigned inbound frames on a port on which a third VLAN port configuration tag (VCEO) is set, is configured in forbidden mode for outbound frames on the respective port.

7. Method according to any of Claims 2 to 6,
in which each VLAN that has assigned inbound frames on a port, on which a third VLAN port configuration tag (VCEO) is set, is configured in trunk mode for outbound frames on the respective port.

8. Method according to any of Claims 2 to 7,
in which first VLAN multicast configuration tags (MCA) are used to define VLAN segment boundaries for transmission of multicast frames within a multicast domain comprising multiple VLANs, in which second VLAN multicast configuration tags (MCFD) are used to define communication devices (1-4, 110, 130) forwarding multicast frames within the multicast domain, in which third VLAN multicast configuration tags (MCED) are used to define communication terminals (111', 112', 131', 132') sending and/or receiving multicast frames within the respective multicast domain, and in which for each multicast domain, the VLAN multicast configuration tags are used in each case to define the VLAN port operating mode of the ports of the communication devices forwarding multicast frames that are assigned to the respective multicast domain.

9. Method according to Claim 8,
in which at least one separate multicast VLAN (40) is configured for the multicast domain defined in accordance with the first VLAN multicast configuration tags (MCA), in which ports between communication devices (1-4, 110, 130) forwarding multicast frames assigned to the same multicast domain and defined in accordance with the second VLAN multicast configuration tags (MCFD) are configured in trunk mode for the respective multicast VLAN, and in which ports on communication devices (110, 130) forwarding multicast frames, to which communication terminals (111', 112', 131', 132') assigned to the same multicast domain and defined in accordance with the third VLAN multicast configuration tags (MCED) are connected, are configured in trunk mode for the respective multicast VLAN (40).

10. Method according to Claim 9,
in which the VLAN port operating modes each comprise a forbidden mode and in which ports on communication devices forwarding multicast frames, to which no communication terminals are connected that are defined by third VLAN multicast configuration tags and/or are assigned to a multicast domain, are configured in forbidden mode for the respective multicast VLAN.

11. Method according to any of Claims 8 to 10,
in which, for forwarding multicast frames between communication terminals (111', 112', 131', 132') in two different VLANs, a multicast VLAN (40) coupling the two VLANs to one another is configured, which comprises forwarding communication devices (110, 130) in both VLANs, communication terminals (111', 112', 131', 132') in both VLANs, and forwarding communication devices (1-4) along at least one path between the two VLANs, and in which the multicast VLAN (40) coupling the two VLANs is configured in trunk mode for outbound multicast frames on the respective port of the communication devices (1-4, 110, 130) forwarding the multicast frames.

12. Method according to any of Claims 1 to 11,
in which paths assigned to a VLAN comprise selected paths that are used to transmit frames assigned to the respective VLAN.

13. Method according to any of Claims 1 to 12,
in which the tracing of the paths assigned to the respective VLAN to define the VLAN port operating modes is carried out starting from each communication terminal assigned to the respective VLAN.

14. Method according to any of Claims 1 to 12,
in which the tracing of the paths assigned to the respective VLAN to define the VLAN port operating modes for a VLAN with no assigned communication terminals is carried out starting from at least one selected switch or router assigned to the respective VLAN.

15. Method according to Claim 14,
in which in order to trace the paths assigned to the respective VLAN, a switch or router is selected at the lowest topological layer of the communication network within the respective VLAN segment boundary.

16. Control program for carrying out a method according to any of Claims 1 to 15, wherein the control program can be loaded in a working memory of a computer or a virtual machine and has at least one code section, during the execution of which
- for each virtual local area network, VLAN, starting from communication terminals (111-112, 121-122, 131-132) on ports of switches (2-3, 110, 120, 130) and/or routers (1, 4) along paths (201-203, 301-306, 401-406, 501-504) assigned to the respective VLAN, a VLAN port operating mode is respectively defined depending on the usage of the respective port by the respective VLAN,
- using first VLAN port configuration tags (EOV), VLAN segment boundaries are defined, wherein inbound and outbound frames on the respective port are assigned to the same VLAN,
- using second VLAN port configuration tags (VCT), limits are set for tracing the paths assigned to the respective VLAN to define the VLAN port operating modes,
- using third VLAN port configuration tags (VCEO), limits for tracing the paths assigned to the respective VLAN are set only in respect of outbound frames to define the VLAN port operating modes,
- the tracing of the paths assigned to the respective VLAN and a configuration of the ports included in these paths, which is based on the definition of the VLAN port operating modes, are controlled using the VLAN port configuration tags,
when the control program is running in the computer or in the virtual machine.

## Revendications

1. Procédé de configuration automatisée d'un réseau de communication comprenant plusieurs réseaux de zone locale virtuels, dans lequel
- pour chaque réseau de zone locale virtuel, VLAN, a lieu, à partir de terminaux (111-112, 121-122, 131-132) de communication à des accès de switch (2-3, 110, 120, 130) et/ou de routeurs (1, 4) le long du chemin (201-203, 301-306, 401-406, 501-504) affecté au VLAN respectif, respectivement une détermination d'un mode de fonctionnement d'accès VLAN, en fonction d'une utilisation de l'accès respectif par le VLAN respectif,
- on détermine des limites de segment VLAN au moyen de premiers repères (EOV) de configuration d'accès VLAN, dans lequel on affecte au même VLAN des trames entrantes et sortantes à l'accès respectif,
- au moyen de deuxièmes repères (VCT) de configuration d'accès VLAN, on met, pour la détermination des modes de fonctionnement d'accès VLAN, des limites pour un suivi des chemins affectés au VLAN respectif,
- au moyen de troisièmes repères (VCEO) de configuration d'accès VLAN, on met, pour la détermination des modes de fonctionnement d'accès VLAN, des limites pour un suivi des chemins affectés au VLAN respectif, seulement par rapport à des trames sortantes,
- on commande, à l'aide des repères de configuration d'accès VLAN, le suivi des chemins affectés au VLAN respectif et une configuration, reposant sur la détermination des modes de fonctionnement d'accès VLAN, des accès impliqués par ces chemins.

2. Procédé suivant la revendication 1,
dans lequel les modes de fonctionnement d'accès VLAN comprennent respectivement au moins un mode trunk et un mode untagged, dans lequel on achemine des trames, qui comprennent un identifiant VLAN associé au VLAN respectif, par un accès, si celui-ci est configuré en mode trunk pour le VLAN respectif, dans lequel on achemine des trames entrantes, qui ne comprennent pas d'identifiant VLAN, en insérant un identifiant VLAN par un accès, si celui-ci est configuré en mode untagged par rapport à des trames entrantes pour le VLAN respectif et dans lequel on achemine des trames sortantes, qui comprennent un identifiant VLAN associé au VLAN respectif, en éliminant l'identifiant VLAN par un accès, si celui-ci est configuré dans le mode untagged par rapport à des trames sortantes pour le VLAN respectif.

3. Procédé suivant la revendication 2,
dans lequel on achemine un VLAN, s'il comprend des terminaux (111-112, 121-122, 131-132) de communication sans fonctionnalité VLAN et, à sa limite de segment VLAN, des trames associées au VLAN, par un accès où un premier repère (EOV) de configuration d'accès VLAN est mis, on configure en mode untagged au premier accès respectif pour des trames entrantes et sortantes.

4. Procédé suivant la revendication 3,
dans lequel, à l'accès respectif où un premier repère (EOV) de configuration d'accès VLAN est mis, on ne configure en mode untagged qu'un VLAN pour des trames entrantes et sortantes.

5. Procédé suivant l'une des revendications 2 à 4,
dans lequel chaque VLAN, dont les trames affectées sont acheminées par un accès où un deuxième repère (VCT) de configuration d'accès VLAN est mis, est configuré en mode trunk pour des trames sortantes à l'accès respectif.

6. Procédé suivant l'une des revendications 2 à 5,
dans lequel les modes de fonctionnement d'accès VLAN comprennent chacun supplémentairement un mode interdit, dans lequel un acheminement de trames entrantes ou sortantes, qui comprennent un identifiant VLAN affecté au VLAN respectif, est, par un accès, bloqué de manière durable et non modifiable dynamiquement, si celui-ci est configuré en mode interdit par rapport à des trames entrantes et sortantes pour le VLAN respectif, et dans lequel chaque VLAN, qui n'a pas de trame entrante affectée à un accès où un troisième repère (VCEO) de configuration d'accès VLAN est mis, est configuré en mode interdit pour des trames sortantes à l'accès respectif.

7. Procédé suivant l'une des revendications 2 à 6,
dans lequel chaque VLAN, qui a des trames entrantes affectées à un accès, où un troisième repère (VCEO) de configuration d'accès VLAN est mis, est configuré en mode trunk pour des trames sortantes à l'accès respectif.

8. Procédé suivant l'une des revendications 2 à 7,
dans lequel, au moyen de premiers repères (MCA) de configuration multicast VLAN, on détermine des limites de segment VLAN pour une transmission de trames multicast dans un domaine multicast comprenant plusieurs VLAN, dans lequel, au moyen de deuxièmes repères (MCFD) de configuration multicast VLAN, on détermine des terminaux (1-4, 110, 130) de communication acheminant des trames multicast dans le domaine multicast, dans lequel, au moyen de troisièmes repères (MCED) de configuration multicast VLAN, on détermine dans le domaine multicast respectif des terminaux (111', 112', 131', 132') de communication envoyant et/ou recevant des trames multicast et dans lequel, pour chaque domaine multicast, il s'effectue, à l'aide des repères de configuration multicast VLAN, respectivement une détermination des modes de fonctionnement d'accès VLAN des accès, affectés au domaine multicast respectif, des appareils de communication acheminant des trames multicast.

9. Procédé suivant la revendication 8,
dans lequel, pour le domaine multicast déterminé correspondant aux premiers repères (MCA) de configuration multicast VLAN, on agence au moins un VLAN (40) multicast distinct, dans lequel on configure, en mode trunk pour le VLAN multicast respectif, des accès entre des appareils (1-4, 110, 130) de communication acheminant des trames multicast déterminées conformément aux deuxièmes repères (MCFD) de configuration multicast VLAN et affectées au même domaine multicast et dans lequel on configure en mode trunk pour le VLAN (40) respectif des accès à des appareils (110, 130) de communication acheminant des trames multicast, auxquels sont raccordés les terminaux (111', 112', 131', 132') de communication, déterminés conformément aux troisièmes repères (MCED) de configuration multicast VLAN et affectés au même domaine multicast.

10. Procédé suivant la revendication 9,
dans lequel les modes de fonctionnement d'accès VLAN comprennent respectivement un mode interdit et dans lequel on configure, en mode interdit pour le VLAN multicast respectif, des accès à des appareils de communication acheminant des trames multicast, auxquels ne sont pas raccordés des terminaux de communication, qui sont déterminés par des troisièmes repères de configuration multicast VLAN et/ou qui sont affectés à un domaine multicast.

11. Procédé suivant l'une des revendications 8 à 10,
dans lequel pour l'acheminement de trames multicast entre des terminaux (111', 112', 131', 132') de communication dans deux VLAN différents, on agence un VLAN (40) multicast reliant entre eux les deux VLAN, qui comprend des appareils (110, 130) de communication d'acheminement dans les deux VLAN, des terminaux (111', 112', 131', 132') de communication dans les deux VLAN et des appareils (1-4) de communication d'acheminement le long d'au moins un chemin entre les deux VLAN, et dans lequel on configure, en mode trunk pour des trames multicast sortantes, le VLAN (40) multicast reliant les deux VLAN à l'accès respectif des appareils (1-4, 110, 130) de communication acheminant les trames multicast.

12. Procédé suivant l'une des revendications 1 à 11,
dans lequel des chemins affectés à un VLAN comprennent des chemins sélectionnés par lesquels on transmet les trames affectées au VLAN respectif.

13. Procédé suivant l'une des revendications 1 à 12,
dans lequel le suivi des chemins affectés au VLAN respectif s'effectue, pour la détermination des modes de fonctionnement d'accès VLAN, à partir de chaque terminal de communication affecté au VLAN respectif.

14. Procédé suivant l'une des revendications 1 à 12,
dans lequel le suivi des chemins affectés au VLAN respectif s'effectue, pour la détermination des modes de fonctionnement d'accès VLAN pour un VLAN sans terminaux de communication affectés, à partir d'au moins un switch ou d'un routeur sélectionné affecté au VLAN respectif.

15. Procédé suivant la revendication 14,
dans lequel, pour le suivi des chemins affectés au VLAN respectif, on sélectionne un switch ou un routeur sur un plan topologique le plus bas du réseau de communication dans la limite de segment VLAN respective.

16. Programme de commande pour effectuer un procédé suivant l'une des revendications 1 à 15, dans lequel le programme de commande peut être chargé dans une mémoire de travail d'un ordinateur ou d'une machine virtuelle et a au moins une partie de code, dont l'exécution
- pour chaque réseau de zone locale virtuel, VLAN, a lieu, à partir de terminaux (111-112, 121-122, 131-132) de communication à des accès de switch (2-3, 110, 120, 130) et/ou de routeurs (1, 4) le long du chemin (201-203, 301-306, 401-406, 501-504) affecté au VLAN respectif, respectivement une détermination d'un mode de fonctionnement d'accès VLAN, en fonction d'une utilisation de l'accès respectif par le VLAN respectif,
- on détermine des limites de segment VLAN au moyen de premiers repères (EOV) de configuration d'accès VLAN, dans lequel on affecte au même VLAN des trames entrantes et sortantes à l'accès respectif,
- au moyen de deuxièmes repères (VCT) de configuration d'accès VLAN, on met, pour la détermination des modes de fonctionnement d'accès VLAN, des limites pour un suivi des chemins affectés au VLAN respectif,
- au moyen de troisièmes repères (VCEO) de configuration d'accès VLAN, on met, pour la détermination des modes de fonctionnement d'accès VLAN, des limites pour un suivi des chemins affectés au VLAN respectif, seulement par rapport aux trames sortantes,
on commande, à l'aide des repères de configuration d'accès VLAN, le suivi des chemins au VLAN respectif et une configuration, reposant sur la détermination des modes de fonctionnement d'accès VLAN, des accès impliqués par ces chemins,
lorsque le programme de commande se déroule dans l'ordinateur ou dans la machine virtuelle.
